Europäisches Patentamt

European Patent Office

Office européen des brevets

(11) Numéro de publication : **0 449 714 A1**

## (12) DEMANDE DE BREVET EUROPEEN

(21) Numéro de dépôt : **91400792.7**

(51) Int. Cl.⁵ : **A23G 3/28**, A21C 15/00, A47J 9/00

(22) Date de dépôt : **25.03.91**

(30) Priorité : **26.03.90 FR 9003803**

(43) Date de publication de la demande :
**02.10.91 Bulletin 91/40**

(84) Etats contractants désignés :
**BE CH DE ES IT LI**

(71) Demandeur : **Daudignac, Jean**
**4, Chemin de la Verderie**
**F-77820 Le Châtelet-en-Brie (FR)**

(72) Inventeur : **Daudignac, Jean**
**4, Chemin de la Verderie**
**F-77820 Le Châtelet-en-Brie (FR)**

(74) Mandataire : **Lordonnois, Michel**
**B.P. 4**
**F-91230 Montgeron (FR)**

(54) **Dispositif de façonnage radial de décors circulaires de pâtisserie.**

(57)   Ce dispositif est constitué par un bras de levier (1) pourvu au moins d'un peigne profilé (4) suivant la configuration radiale du décor circulaire désiré, ce bras de levier comportant à une extrémité une pointe (6), saillant inférieurement de manière réglable, destinée à être fichée au centre de l'emplacement du décors à réaliser, ainsi qu'une poignée supérieure (8) de maintien et, à son autre extrémité ou extrémité libre, une lame de coupe (10) réglable en dépassement inférieur par rapport au niveau du peigne (4), ainsi qu'une autre poignée supérieure (9) destinée à l'entraînement manuel en mouvement circulaire du bras de levier.

EP 0 449 714 A1

**Fig.1**

La présente invention se rapporte à un dispositif adapté pour façonner radialement des décors circulaires de pâtisserie et, plus particulièrement, elle concerne un tel dispositif adapté pour réaliser manuellement des décors dont la configuration radiale est constituée notamment d'ondulations concentriques ou de rainures et nervures concentriques, ou encore de décors de révolution, ces décors pouvant être façonnés à part de la pâtisserie et appliqués ensuite sur celle-ci ou bien de tels décors peuvent être réalisés directement sur le dessus de pâtisseries choisies ayant des épaisseurs qui peuvent varier de l'une à l'autre.

Jusqu'à maintenant, dans les techniques appliquées en pâtisserie, on utilise diverses sortes de peignes à manche ou à renflement dorsal formant poignée pour réaliser des décors circulaires sur des pâtisseries, ces peignes nécessitant l'utilisation d'un ou plusieurs guides si l'on désire que ces décors soient sensiblement concentriques entre eux. Dans la plupart des cas, le pâtissier néglige l'utilisation de ces guides et se fie simplement à son tour de main mais les décors à rainures et nervures concentriques réalisés ne sont pas toujours très réguliers ce qui nuit à la présentation de la pâtisserie et peut conduire à une mévente.

C'est pour éviter de tels inconvénients aux pâtissiers et pour leur permettre de réaliser des décors circulaires parfaits sans avoir à utiliser des guides pour la conduite des peignes que l'inventeur a créé le dispositif selon l'invention qui est remarquable par le fait qu'il est constitué par un bras de levier pourvu dans au moins un de ses bords longitudinaux, et notamment dans son bord inférieur, d'une rainure de fixation, de manière amovible, d'un peigne profilé suivant la configuration radiale du décor circulaire désiré, ce bras de levier comportant à une extrémité une pointe, saillant inférieurement de manière réglable, destinée à être fichée au centre de l'emplacement du décor à réaliser, ainsi qu'une poignée supérieure de maintien et, à son autre extrémité, ou extrémité libre, une lame de coupe réglable en dépassement inférieur par rapport au niveau du peigne, ainsi qu'une autre poignée supérieure destinée à l'entraînement manuel en mouvement circulaire du bras de levier, dont le peigne façonnera concentriquement le décors choisi, lequel sera délimité extérieurement par la lame de coupe.

Dans un mode de réalisation du dispositif, de manière plus sophistiquée et conformément à l'invention, le bras de levier est adapté pour porter deux peignes interchangeables et est supporté par un tourillon traversant un moyeu de châssis porteur à bras radiaux où chacun comporte, à son extrémité extérieure, un pied réglable en hauteur, ce tourillon étant commandé en rotation par une manivelle et étant adapté pour coulisser vericalement dans le moyeu, suite à un effort manuel dirigé vers le bas sur cette manivelle pour manoeuvrer en rotation le bras de levier afin de réaliser, au moyen du peigne inférieur le façonnage radial du décor circulaire, ce bras de levier étant remonté élastiquement à sa position haute initiale, sitôt que l'effort descendant sur la manivelle cesse, par l'intermédiaire d'un ressort de compression monté entre cette dernière et le dessus du moyeu du châssis porteur à bras radiaux.

De manière plus spécifique, on doit noter que dans ce mode de réalisation, le bras de levier porte-peignes est fixé par sa partie centrale dans une rainure diamétrale pratiquée dans l'extrémité inférieure du tourillon et comporte des peignes seulement sur une moitié de sa longueur, son autre moitié dégarnie faisant office de balancier et délimitant circulairement le décor façonné au moyen d'une simple dent extrême de râclage à laquelle est accolée une lame de coupe circulaire réglable en dépassement inférieur par rapport à cette dent.

Dans un autre mode de réalisation du dispositif conforme à l'invention, le bras de levier porte-peignes adapté pour être monté, comme dans le mode de réalisation précédent, sur un tourillon à manivelle, est constitué par deux lames jumelées formant mâchoires de serrage et adaptées pour maintenir entre-elles des peignes constitués de plusieurs tronçons dentelés suivant une même configuration ou suivant diverses configurations différentes selon le décor circulaire désiré, ces lames étant contraintes au serrage par des boulons moletés et à s'écarter, suite au desserrage de ces derniers, par un ressort comprimé entre elles.

D'autres caractéristiques de la présente invention apparaîtront de la description suivante de modes de réalisation du dispositif permettant le façonnage de décors circulaires de pâtisserie, donnés à titre d'exemples non limitatifs et représentés schématiquement dans les dessins ci-joints dans lesquels:

— La figure 1 est une vue schématique en élévation du dispositif conforme à l'invention selon un premier mode de réalisation;

— La figure 2 est une vue schématique en élévation du dispositif selon un second mode de réalisation et incorporé dans un châssis de support en rotation.

— La figure 3 est une vue schématique en élévation du bras de levier porteur de peignes selon le second mode de réalisation du dispositif représenté dans la figure 2.

— La figure 4 est une vue schématique en élévation du bras de levier porteur de peignes selon un troisième mode de réalisation conforme à l'invention et adaptable dans le dispositif représenté dans la figure 2.

— La figure 5 est une vue en coupe du bras de levier prise suivant la ligne AA de la figure 4.

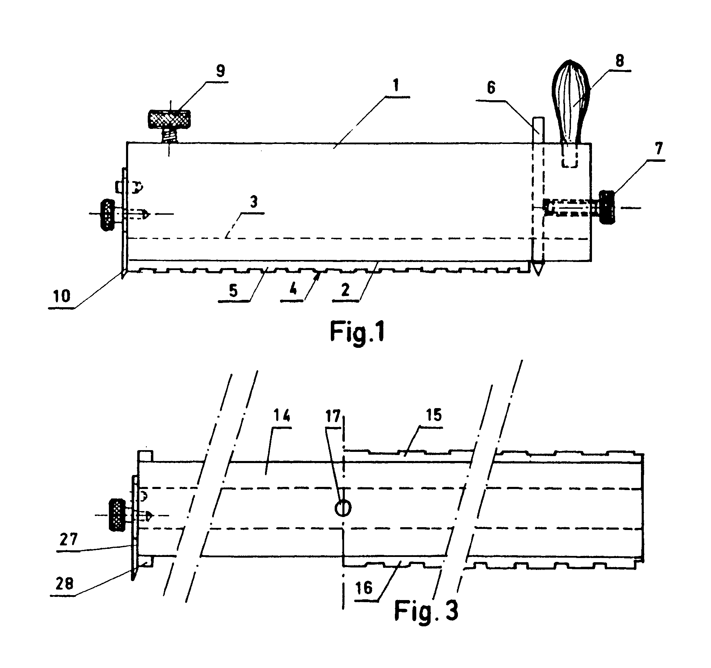

Comme on le voit dans la figure 1, dans un premier mode de réalisation, le dispositif conforme à l'invention est constitué par un bras de levier 1 pourvu, dans son bord longitudinal inférieur 2, d'une rainure de fixation 3, de façon interchangeable, d'un peigne 4 profilé suivant la configuration radiale du décor désiré et, dans le cas présent, à nervures et rainures concentriques, ces dernières étant façonnées par les dents 5 du peigne alors que les nervures se forment entre ces dents. Ce bras de levier 1 comporte, à une extrémité, une pointe 6, dont l'extrémité inférieure pointue peut saillir plus ou moins à la demande par rapport au niveau des dents du peigne, cette pointe 6 pouvant être immobilisée au moyen d'une vis pointeau à tête molletée 7 et étant destinée à être fichée au centre de l'emplacement du décor à façonner. Sur le bord supérieur du bras de levier et légèrement décalée par rapport à la pointe 6, une poignée de maintien 8 du dispositif est prévue.

Comme on le voit au mieux sur cette figure 1, l'extrémité du bras de levier opposée à la poignée de maintien 8 est pourvue également sur son bord supérieur d'une poignée 9 de commande manuelle en mouvement circulaire du dispositif, cette poignée étant représentée sous forme d'une vis à tête moletée. Cette extrémité du bras de levier comporte également une lame de coupe circulaire 10, réglable en profondeur de coupe par rapport au peigne 4 et adaptée pour délimiter le bord extérieur du décor circulaire à nervures et rainures concentriques réalisé.

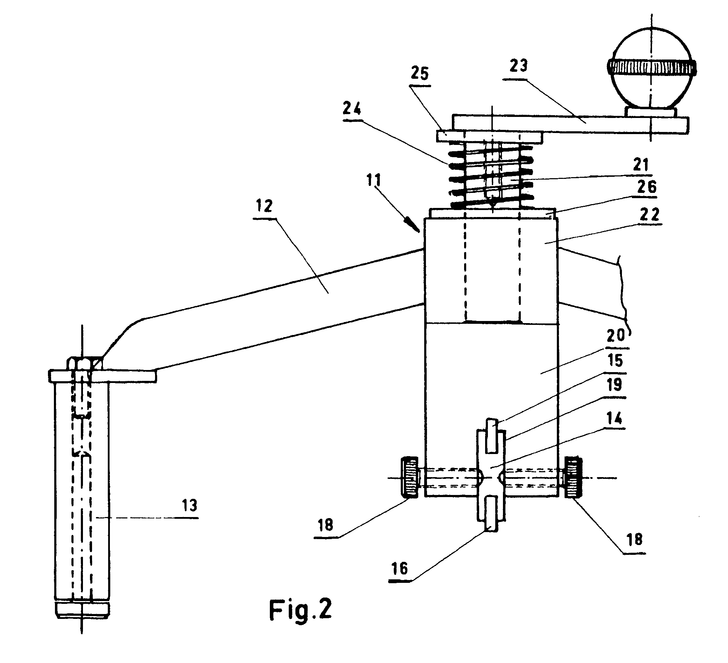

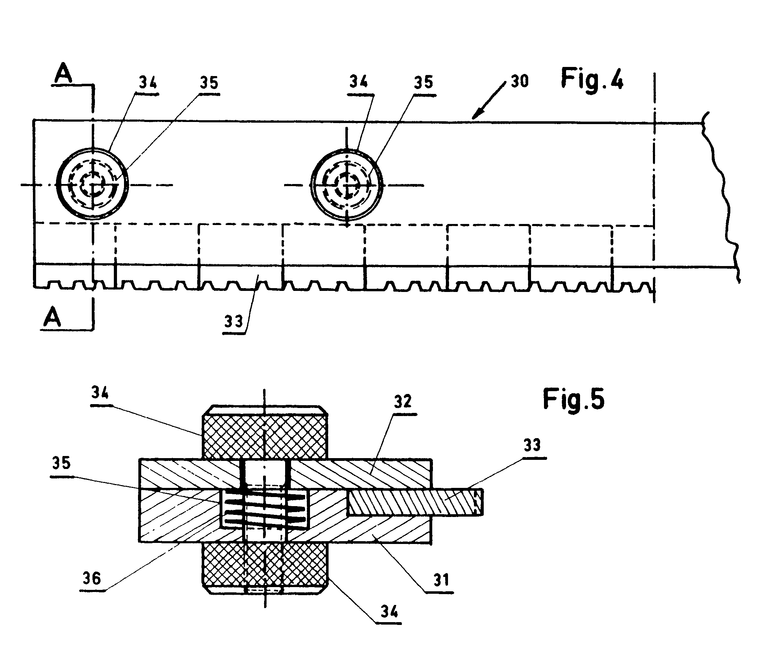

Comme représenté dans la figure 2, selon un second mode de réalisation du dispositif conforme à l'invention, le bras de levier porte-peignes représenté dans la figure 3 est supporté par un châssis 11 à bras radiaux 12 pourvus chacun d'un pied 13 réglable en hauteur par vissage ou dévissage, ou de manière télescopique.

Dans ce second mode de réalisation, le bras de levier 14 est pourvu d'un peigne supérieur 15 et d'un peigne inférieur 16 mais est dépourvu de pointe d'enfichage dans le centre de l'emplacement du décor à façonner ainsi que des poignées de maintien et de mise en rotation manuelle qui existent dans le mode de réalisation de la figure 1. Par contre, ce bras de levier 14 est fixé par sa partie centrale 17 au moyen de vis à tête moletée 18 dans une rainure 19 pratiquée diamétralement dans l'extrémité inférieure d'un tourillon 20 dont la tige supérieure 21, épaulée, traverse le moyeu 22 du châssis de support 11 à bras radiaux. Cette tige est pourvue, à son extrémité supérieure, d'une manivelle 23 commandant le mise en rotation du bras de levier 14, ainsi que d'un ressort 24 de compression engagé sur elle entre le moyeu 22 et le dessous de cette manivelle 23 avec interposition de rondelles d'appui supérieure 25 et inférieure 26. A noter que ce ressort 24 est adapté pour s'affaisser lorsque l'on agit sur la manivelle si bien que le bras de levier 14 descend, alors qu'il rappelle élastiquement celui-ci à sa position haute initiale lorsque l'effort manuel sur la manivelle cesse.

Comme on le remarque en particulier dans la figure 3, le bras de levier 14 est prévu d'une longueur sensiblement double de celle des peignes 15 et 16 qu'il porte puisque fixé, comme expliqué précédemment, par sa partie centrale 17 dans la rainure diamétrale 19 du tourillon 20. De plus, à son extrémité opposée aux peignes, il est pourvu de manière semblable au dispositif de la figure 1, d'une lame de coupe circulaire 27, réglable par rapport à une dent de peigne 28 extrême, prévue pour faire office de dent râcleuse délimitant extérieurement la configuration radiale du décor réalisé.

Comme représenté dans les figures 4 et 5, selon un troisième mode de réalisation, le bras de levier 30 est constitué de deux lames 31, 32, formant mâchoires et enserrant entre-elles un peigne 33 constitué de plusieurs tronçons, dentelés de plusieurs façons, identiques ou différentes, suivant le façonnage du décor désiré. Dans ce mode de réalisation représenté, la lame 31 est seule entaillée pour loger les tronçons constituants le peigne 33 alors que la lame 32 est plane et forme plaque de serrage contrainte par les boulons moletés 34. A noter en outre que la lame 31 comporte également deux alvéoles 35 adapées pour loger chacune un ressort 36 obligeant la lame 32 à s'écarter lorsque l'on desserre les boulons pour libérer ou changer les tronçons de peigne.

Il est bien évident que les lames 31 et 32 peuvent être autrement conçues et être entaillées et alvéolées toutes deux, de manière symétrique, sans sortir du cadre de la présente invention.

## Revendications

1.- Dispositif de façonnage radial de décors circulaires de pâtisserie dont la configuration radiale est constituée notamment d'ondulations concentriques, ou de rainures et nervures concentriques, ou encore de décors de révolution, ce dispositif comportant un bras de levier (1) pourvu à une extrémité d'une pointe (6), saillant inférieurement de manière réglable, destinée à être fichée au centre de l'emplacement du décors à réaliser, ainsi que d'une poignée supérieure (8) de maintien et étant caractérisé par le fait que le bras de levier (1) est pourvu, dans au moins un de ses bords longitudinaux et notamment dans son bord inférieur (2), d'une rainure de fixation (3), de manière amovible, d'un peigne profilé (4) suivant la configuration radiale du décor circulaire désiré, ce bras de levier (1) comportant par ailleurs, à son extrémité opposée à la pointe (6), ou extrémité libre, une lame de coupe (10) réglable en dépassement inférieur par rapport au niveau du peigne (4), ainsi qu'une autre poignée supérieure (9) destinée à son entraînement manuel en mouvement circulaire de manière que le peigne façonne concentriquement le décors choisi, lequel sera délimité extérieurement par la lame de coupe.

**2.-** Dispositif selon la revendication 1, dont le bras de levier est supporté par un tourillon (20) traversant un moyeu (22), commandé en rotation par une manivelle supérieure (23) et adapté pour coulisser verticalement dans de moyeu, mais étant maintenu en position haute par un ressort de compression (24) agissant sur le dessus du moyeu et sous le dessous de la manivelle, ce dispositif étant caractérisé par le fait que le bras de levier est adapté pour porter deux peignes interchangeables (15, 16) et que le moyeu (22) est supporté par un châssis porteur (11) à bras radiaux (12) où chacun de ceux-ci comporte, à son eextrémité extérieure, un pied (13) réglable en hauteur de façon que, suite à un effort manuel dirigé vers la bas sur la manivelle pour manoeuvrer en rotation le bras de levier (14) on puisse réaliser, au moyen du peigne inférieur (16) le façonnage radial du décor circulaire, ce bras de levier étant remonté élastiquement à sa position haute initiale, sitôt que l'effort descendant sur la manivelle (23) cesse, par l'intermédiaire du ressort de compression (24).

**3.-** Dispositif selon la revendication 2, caractérisé par le fait que le bras de levier (14) porte-peignes est fixé par sa partie centrale (17) dans une rainure diamétrale (19) pratiquée dans l'extrémité inférieure du tourillon (20) et comporte des peignes (15, 16) seulement sur une moitié de sa longueur, son autre moitié dégarnie faisant office de balancier et délimitant circulairement le décor façonné au moyen d'une simple dent extrême (28) de raclage à laquelle est accolée une lame (27) de coupe circulaire réglable en dépassement inférieur par rapport à cette dent.

**4.-** Dispositif selon l'une ou l'autre des revendications 2 ou 3, caractérisé par le fait que le bras de levier (30) porte-peignes adapté pour être monté sur le tourillon (20) à manivelle (23) est constitué par deux lames jumelées (31, 32) formant mâchoires de serrage et adaptées pour maintenir entre-elles des peignes (33) constitués de plusieurs tronçons dentelés suivant une même configuration ou suivant diverses configurations différentes selon le décor circulaire désiré, ces lames étant contraintes au serrage par des boulons moletés (34) et à s'écarter, suite au désserrage de ces derniers, par un ressort (36) comprimé entre elles.

EP 0 449 714 A1

Fig.1

Fig. 3

Fig.2

Fig.4

Fig.5

Office européen
des brevets

# RAPPORT DE RECHERCHE EUROPEENNE

Numero de la demande

EP    91 40 0792

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-2 503 673 (LINDQUIST)<br>* colonne 4, ligne 27 - colonne 5, ligne 9; figures 1,8 *<br>--- | 1 | A23G3/28<br>A21C15/00<br>A47J9/00 |
| A | GB-A-889 034 (SHEPHERD)<br>* page 1, ligne 55 - ligne 85; figures *<br>--- | 1 | |
| A | EP-A-86 499 (FRISCO-FINDUS AG)<br>* page 3, ligne 6 - page 5, ligne 17; figures *<br>--- | 1 | |
| A | US-A-3 786 564 (ACHESON)<br>* colonne 2, ligne 3 - colonne 5, ligne 28; figures 2,4 *<br>--- | 2 | |
| A | US-A-4 858 322 (KLUGA)<br>----- | | |

| DOMAINES TECHNIQUES RECHERCHES (Int. Cl.5 ) |
|---|
| A23G<br>A21C<br>A47J<br>B26B |

Le présent rapport a été établi pour toutes les revendications

| Lieu de la recherche | Date d'achèvement de la recherche | Examinateur |
|---|---|---|
| LA HAYE | 03 JUILLET 1991 | BODART P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................................
& : membre de la même famille, document correspondant

EPO FORM 1503 03.82 (P0402)